Europäisches Patentamt

European Patent Office

Office européen des brevets

(19)

(11) **EP 1 498 832 A1**

(12) **EUROPEAN PATENT APPLICATION**
published in accordance with Art. 158(3) EPC

(43) Date of publication:
**19.01.2005 Bulletin 2005/03**

(21) Application number: **03719103.8**

(22) Date of filing: **14.04.2003**

(51) Int Cl.⁷: $G06F\ 17/60$

(86) International application number:
**PCT/JP2003/004719**

(87) International publication number:
**WO 2003/090137 (30.10.2003 Gazette 2003/44)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **19.04.2002 JP 2002118411**

(71) Applicant: **Omron Corporation**
**Kyoto-shi, Kyoto 600-8530 (JP)**

(72) Inventors:
• **KANAYAMA, K.,**
**c/o OMRON CORP.,801,Minamifudodo-cho**
**Shimogyo-ku, Kyoto-shi, Kyoto 600-8530 (JP)**
• **SUZUKI, T.,**
**c/o OMRON CORP.,801,Minamifudodo-cho**
**Shimogyo-ku, Kyoto 600-8530 (JP)**

(74) Representative: **Calderbank, Thomas Roger**
**Mewburn Ellis LLP**
**York House**
**23 Kingsway**
**London WC2B 6HP (GB)**

(54) **SECURITY SERVICE MANAGEMENT SYSTEM, SECURITY SERVICE MANAGEMENT TERMINAL, SECURITY SERVICE MANAGEMENT METHOD, SECURITY SERVICE MANAGEMENT PROGRAM, AND COMPUTER-READABLE RECORDING MEDIUM CONTAINING THE PROGRAM**

(57)     A security service manager system includes a security service manager terminal and a central device. The security service manager terminal includes: a sensor control section for transmitting a detection signal obtained from a sensor to an observation monitor and a user terminal; an operation history recording section recording operation history of the sensor; and a service history reporting section transmitting the operation history to the central device. The central device includes a fee calculation section calculating fees from the operation history of a sensor received from the security service manager terminal. Thus, the user is charged fees based on his usage of the services.

FIG. 1

**Description**

TECHNICAL FIELD

The present invention relates to a security service manager system, terminal, method, computer, and program which provide home and other security services, as well as a computer-readable storage medium containing such a program.

BACKGROUND ART

In conventional home security services geared for detached houses, apartment houses, and small stores, security cameras and sensors, like trespasser sensors, are installed at target sites. On detection of an abnormal sensor signal, security guards are dispatched. This type of service is available when the system is operating in alert mode. The sensors can be turned on/off, allowing the user to switch the system between alert mode and non-alert mode. The system may be switched to the latter mode when the user is at home. Typically, users pay flat monthly fees, however long the system operates in non-alert mode.

Currently, home security services have not gained much popularity. A likely cause is that the conventional security services are mostly targeted at corporate customers, and the same strategy is being used for home security services. Specific problems of conventional home security services are long-term subscription and large dimensions of devices, which lead to expensive fees and time-consuming installation process.

Meanwhile, there is a prediction of increasing needs for only short-term subscription to home security services, for example, until children have grown up in a nuclear family and when the parents are out of home or the family is on an overseas travel. The needs are met if the user can readily install and use the device only when he needs it. There is a demand for these new types of home security services.

However, conventional security services are mostly targeted at corporate customers, and their fee schedules are based on a long-term subscription. This system is not applicable to a short-term user who want to make payment only for the services rendered. Conventional home security systems have failed to provide a usage-based fee system.

DISCLOSURE OF INVENTION

The present invention, conceived to address the problems, has an objective to provide a security service manager system, terminal, and method which offer home and other on-demand security services at usage-based rates. Another objective of the present invention is to provide a security service manager program which realizes such a security service manager system, as well as a computer-readable storage medium containing the program.

To address the problems, the security service managing method in accordance with the present invention includes:

the sensor control step of obtaining a detection signal from a sensor and transmitting the signal to a monitor device;
the history recording step of recording operation history of the sensor; and
the fee calculation step of calculating fees from the operation history.

According to the method, the security services fees can be calculated from the operation history of the sensor used for the security services. Therefore, the user is charged fees based on his usage of the services. The sensor operation history giving a fee calculation basis may be any one of the length of time the sensor was in active operation, the number of transmitted images, and other information, or any combination of such information. Therefore, the security service managing method provides home and other security services by a usage-based fee system.

In addition, the security service manager system in accordance with the present invention includes a security service manager terminal and a central device. The security service manager terminal includes: a sensor control section for transmitting a detection signal obtained from a sensor to a monitor device; an operation history recording section for recording operation history of the sensor; and a service history reporting section for transmitting the operation history to the central device. The central device includes a fee calculation section for calculating fees from the operation history of the sensor received from the security service manager terminal.

According to the arrangement, the security services fees can be calculated from the operation history of the sensor used for the security services. Therefore, the user is charged fees based on his usage of the services. The sensor operation history giving a fee calculation basis may be any one of the length of time the sensor was in active operation, the number of transmitted images, and other information, or any combination of such information. Therefore, the security service manager system provides home and other security services by a usage-based fee system.

In addition, a security service manager terminal in accordance with the present invention includes: a sensor control section for transmitting a detection signal obtained from a sensor to a monitor device; an operation history recording section for recording operation history of the sensor; and a service history reporting section for transmitting the operation history recorded by the operation history recording section to a central device including a fee calculation section for calculating fees from the operation history.

According to the arrangement, the security services fees can be calculated in the central device from the operation history of the sensor connected to the security service manager terminal used for the security services. Therefore, the user is charged fees based on his usage of the services. The sensor operation history giving a fee calculation basis may be any one of the length of time the sensor was in active operation, the number of transmitted images, and other information, or any combination of such information. Therefore, the security service manager terminal provides home and other security services by a usage-based fee system.

Another security service manager terminal in accordance with the present invention includes: a sensor control section for transmitting a detection signal obtained from a sensor to a monitor device; an operation history recording section for recording operation history of the sensor; a fee calculation section for calculating fees from the operation history; a fee collection device; and a fee collection section for collecting the fees calculated by the fee calculation section using the fee collection device.

According to the arrangement, fees can be collected through a prepaid card, e-money, cash, a credit card, etc. using a suitable fee collection device. Therefore, the security service manager terminal can single-handedly implement the fee calculation and collection functionality, as well as the obtaining and transmitting of the detection signal from the sensor. As a result, fees can be collected efficiently at the very site where security services are provided.

Additional objects, advantages and novel features of the invention will be set forth in part in the description which follows, and in part will become apparent to those skilled in the art upon examination of the following or may be learned by practice of the invention.

BRIEF DESCRIPTION OF DRAWINGS

Figure 1 is a schematic functional block diagram showing the arrangement of a security service manager system in accordance with an embodiment of the present invention.

Figure 2 is a schematic illustration of a security system under the control of the security service manager system in Figure 1.

Figure 3 is an illustration of a fee-charging method for the security services provided by the security service manager system in Figure 1.

Figure 4 shows an example of a fee information table for the security service manager system in Figure 1.

Figure 5 is an illustration of an example of a terminal information table for the security service manager system in Figure 1.

Figure 6 is an illustration of an example of a sensor operation information table for the security service manager system in Figure 1.

Figure 7 is an illustration of an example of a setting entries information table for the security service manager system in Figure 1.

Figure 8 is a flow chart depicting a start-up process for the security service manager system in Figure 1.

Figure 9 is a flow chart depicting an alert mode process for the security service manager system in Figure 1.

Figure 10 is a flow chart depicting a fee-charging process for the security service manager system in Figure 1.

Figure 11 illustrates an example of a screen displayed when entering settings into the security service manager system in Figure 1.

Figure 12 is a schematic functional block diagram showing the arrangement of a variation of the security service manager system in Figure 1.

Figure 13 illustrates an example of a screen displayed when entering settings at the security service manager terminal in Figure 12.

BEST MODE FOR CARRYING OUT THE INVENTION

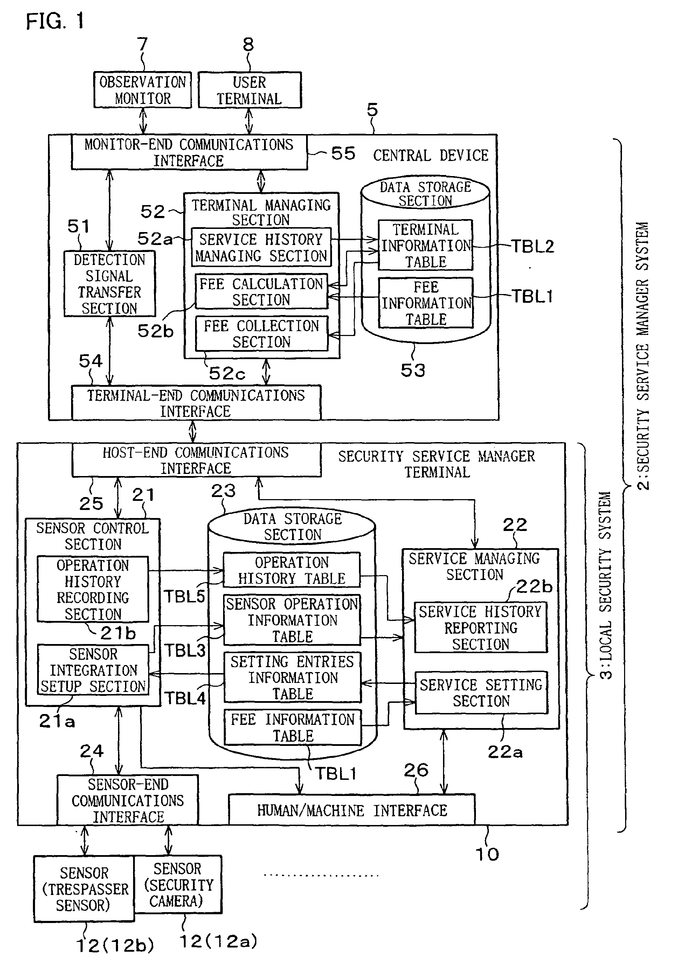

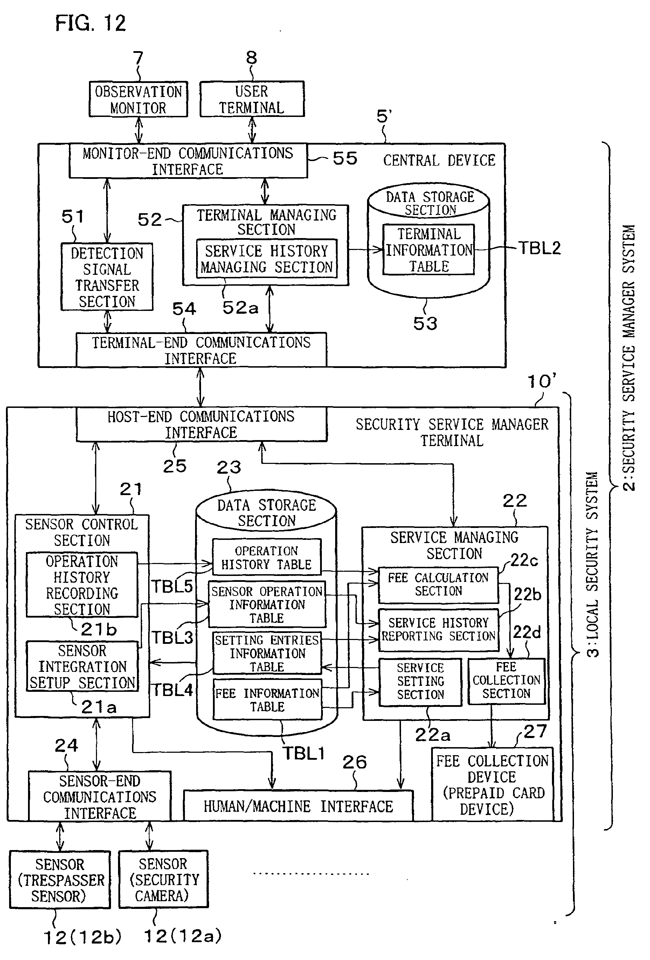

Referring to Figures 1 through Figure 13, the following will describe an embodiment of the present invention. Figure 1 is an example of an arrangement where fees are calculated by a central device 5 for collection. Figure 12 is an example of an arrangement where fees are calculated by a security service manager terminal 10 for collection.

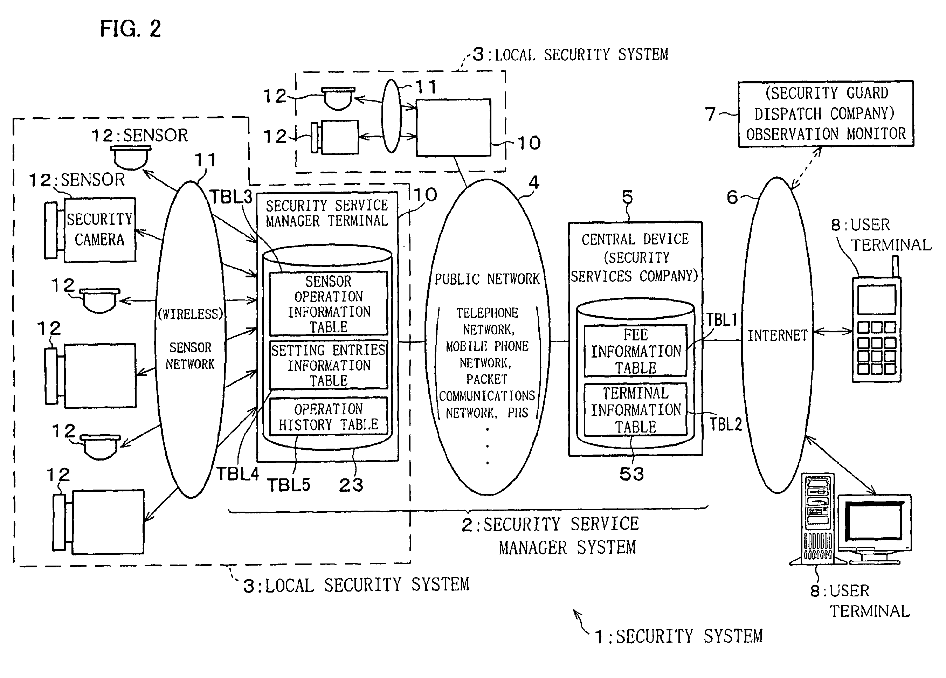

A security service manager system 2 (Figure 2) in accordance with the present embodiment allows the user to specify periods that he needs the services and the type and number of sensors whenever he needs to do so. In the home and other security services provided by the system 2, the user is charged only for the time lengths he received the services. To this end, the security service manager system 2 records usage history (operation history table TBL5, terminal information table TBL2) based on which use fees are calculated. The history records enable short-term (e.g. 24 hours to a few days) security services.

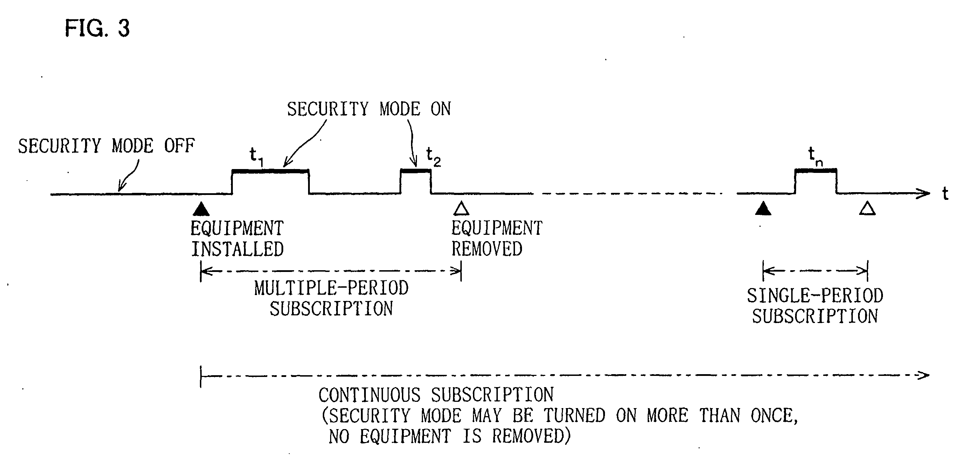

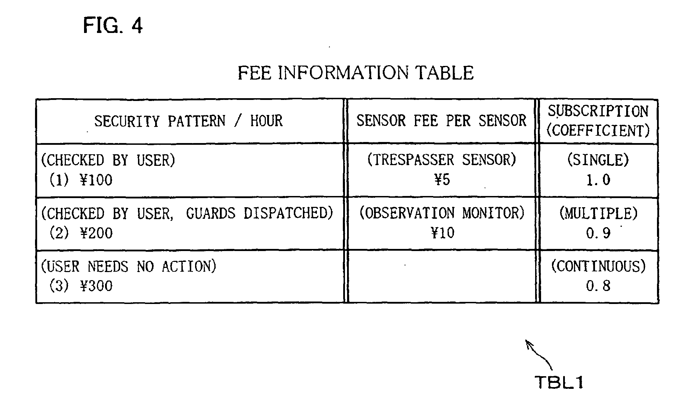

Referring to Figure 3, the security service manager system 2, for example, adds up the time lengths for which security services were actually rendered and calculates the fees based on the sum. Equation (1) below is an example formula for the fee calculation. Specific values of the unit prices, coefficients, etc. used in the evaluation of equation (1) are specified in the fee information table TBL1 (Figure 4) in advance. Equation (1) may be changed where necessary by the addition of a coefficient for instance. Hereafter, the present embodiment will focus on fee calculations using equation (1); fees may however be calculated using other suitably devised equations depending on service configuration.

$$
\begin{aligned}
\text{Fees} = \text{ } & \text{Subscription Type} \\
& \times \sum_{i=1}^{n} [\{\text{Pattern-specific Unit Price} \\
& \quad + (\text{Sensor Price Per Unit Time} \times \text{Sensor Count}) \\
& \quad + (\text{Camera Price Per Unit Time} \times \text{Camera Count})\} \\
& \quad \times \text{Sensor Usage Time } t_i] \qquad\qquad \ldots(1)
\end{aligned}
$$

In the equation, the "security alert pattern" identifies, for example, one of three security alert patterns: In security alert pattern 1, nothing is done more than transmitting the sensor signal output to the user. Pattern 2 requires the user to confirm a sensor signal output, after which security guards may be dispatched upon a user request. Pattern 3 offers a complete set of services where when the security services company confirms a sensor signal output, it dispatches security guards if necessary, depending on the unusual situation. The "pattern-specific unit price" refers to a fee per unit time specified for each security alert pattern.

The "subscription type" distinguishes, for example, between a single-period subscription, a multiple-period subscription, and a continuous subscription. For the purpose of evaluating equation (1), the subscription type is a predetermined constant and common to all the security alert patterns.

The "sensor price per unit time" and "camera price per unit time" are predetermined fees for sensor/camera per unit time. These prices may be either common to all the security alert patterns or specific to each of the security alert patterns. The "sensor count" and "camera count" are the number of sensors/cameras used in each alert period $t_1$ to $t_n$ in the subscription period.

Referring to Figure 3, in a single-period subscription, equipment is installed before alert period $t_n$ and removed after alert period $t_n$. Fees are charged only for alert period $t_n$ during which the equipment is switched to alert mode. In a multiple-period subscription, equipment is installed before alert period $t_1$ and removed after alert period $t_2$. Fees are charged only for alert periods $t_1$ and $t_2$ during which the equipment is switched to alert mode. A continuous subscription has no fixed time for equipment removal. Fees are charged only for alert periods $t_1$ to $t_n$ during which the equipment is switched to alert mode. In multiple-period or continuous subscriptions, the security alert pattern, the number of sensors/cameras, etc. may be varied from one alert period to the other in the subscription period.

In this manner, the security service manager system 2 is capable of calculating use fees in accordance with the time that security monitoring was actually implemented (service usage time). In cases of a security camera, for example, where motion video is used in monitoring, the use fees may be calculated based on the number of frames (still images) transmitted. In addition, if the installed sensors/cameras are all used in any alert period, that is, there are no changes from one alert period to another in the type/number of active sensors/cameras, service usage times can be added up for each security alert pattern to facilitate use fees formula.

Also, the security service manager system 2 provides a self-setting time security service where the user has to handle works up to the start of the service, including the installation of security equipment and the entry of various information to the system. To this end, the security service manager system 2 supports plug and play operation with cameras and other sensors. As the user connects a sensor to the security service manager terminal 10 and turns on power supply, the sensor is automatically integrated to the system and becomes ready to use. Thus, the user can handle all the works from registration to the start of the service.

The security service manager system 2 is thereby capable of providing on-demand home security services at usage-based rates. In addition, fees may be collected prior to use using prepaid cards. Moreover, security equipment may be rented out.

Referring to Figure 2, in the security system 1, the central device 5 is connected to a local security system 3 over a public network 4 and to the observation monitor (monitor device) 7 and the user terminal (monitor device) 8 over the Internet 6.

The central device 5, installed at a security services company providing security services using the security system 1, manages the entire security services. The central device 5 is connected to local security systems 3 installed at multiple target monitoring sites over the public network 4. The public network 4 may be a telephone network, mobile phone network, packet communications network, or PHS (personal handyphone system).

The local security system 3 is installed at a target monitoring site, such as the house or small store of the user. In the local security system 3, security cameras and trespasser and like sensors 12 are located at various places. Signal outputs are collected by the security service manager terminal 10 and transferred to the observation monitor 7 and the user terminal 8.

The security service manager terminal 10 in the local security system 3 is connected to the central device 5 over the public network 4 for two-way communications, so as to make up the security service manager system 2. The central device 5, the security service manager terminal 10, and the sensors 12 are assigned IP (Internet protocol) addresses.

Here, the security service manager terminal 10, a gateway to the local security system 3, includes, for example, a computer including a CPU, a memory, and an interface to external devices all integrated on a single chip, as well as a display and an input device which are connected to the chip. The display is, for example, an LCD (liquid crystal display). The input device is, for example, a key pad. Constructed very simply in this manner, the security service manager terminal 10 is compact, cheap, and easy to install and set up.

The present embodiment focuses on basic functionality, i.e., signal transfers and fee calculations, of the security service manager system 2. Higher functionality may be provided, preferably, in the central device 5. This will enable the security service manager system 2 as a whole to achieve high-level functionality even if the local security system 3 is made up of simple equipment. The security service manager system 2 is not of course limited to the centralized structure where various functions run on the central device 5; more functions may be implemented on the security service manager terminal 10 in a distributed structure. Those functions to be moved to the security service manager terminal 10 may be selected suitably in accordance with specifications required in the security service manager system 2.

The observation monitor 7 is installed at a security company for a monitoring purpose. The company deploys security guards to the user's house or another target monitoring site when the observation monitor 7 displays a detection signal indicating an abnormality or when the company receives such a request from the user.

The user terminal 8 is assigned as an information transmission destination in advance so as to allow the user to enter monitoring plan settings, check the monitoring condition, control sensors, and check fee estimation and charge. The user terminal 8 may be, for example, a mobile phone that the user always carries with him.

In this manner, the security service manager terminal 10 is connected to the central device 5 at the security services company, the observation monitor 7 at the security guards company, and the user's user terminal 8 over the public network 4 and the Internet 6 which are wide area communications networks. In this structure, the security guards and the user can track the sensing condition of the sensors 12 through the information sent from the security service manager terminal 10 in the local security system 3, which in turn enables, for example, security monitoring while the house is empty.

Figure 1 is a schematic functional block diagram showing an arrangement example of the security service manager system 2, that is, the local security system 3 and the central device 5. The arrangement is designed to calculate and collect fees in the central device 5.

Referring to Figure 1, the local security system 3 includes the security service manager terminal 10 and the sensors 12 communicatively connected to the terminal 10 over a mostly wireless sensor network 11.

The sensor 12 detects an abnormality of a monitoring target and outputs a detection signal indicative of results of the detection. Typically, the sensor 12 is selected so that it will match a specific purpose, such as, house break-in monitoring; fire monitoring; infant, patient, or pet monitoring; or car theft monitoring for installation at a suitable location for that purpose.

Examples of sensors for the detection of a human body and other object include photoelectric sensors, beam sensors, ultrasonic sensors, and infrared sensors. Those for the detection of a motion or damage to an object include vibration sensors and acceleration sensors (3D sensors). Those for sound detection include microphones, pitch sensors, and acoustic sensors. Those for image capture include video cameras. Those for the detection of a fire and associated phenomena include temperature sensors, smoke sensors, and humidity sensors. Those mounted to moving objects, primarily humans and cars, include GPS (global positioning system) devices, acceleration sensors, windshield wiper ON/OFF sensors, vibration sensors, and tilt sensors. Those installed indoors include light ON/OFF sensors and water leak sensors. Those installed outdoors include rain gauges, wind gauges, and thermometers. There are various other sensors: capacitance level sensors, capacitive break-in sensors, electric current sensors, voltage sensors, door opening/closure detecting reed switches, and time detecting clocks.

In this manner, the sensor 12 is not limited to devices generally called "sensors." The sensor 12 may be any kind of device which detects an event and for example, converts a result into an electric signal for output.

In addition, the sensor 12 may be a security camera. The security camera here is refer to a device which includes an image capture section built around, for example, a camera tube, CCD (charge coupled device) image capture element, or CMOS (complementary metal oxide semiconductor) image capture element, as well as is equipped with zoom and autofocus functions and capable of operating either automatically or under the control of signals from the security service manager terminal 10. The security service manager terminal 10 is also capable of generating control signals in response to a request from the central device 5, the observation monitor 7, and the user terminal 8. These active sensors can perform more precise detection in accordance with the event.

Further, the sensor 12 may be autonomous. Here, the autonomous sensor is refers to a device which, for example, periodically notifies the security service manager terminal 10 of information on the sensor itself ("sensor information") and detection results. The sensor information indicates, for example, the type (inclusive of its detection target) and layout (position) of the sensor.

In some cases, the sensor are attached to moving objects like cars. Moving the sensor may change the information derived from the sensor's detection results. Take, for example, a thermometer mounted to a car as a sensor sensing air temperature; results represent air temperatures at different places, depending on the location of the car, hence, of the sensor. Using an autonomous sensor in such situations makes it possible to continuously keep track of where the sensor is sensing air temperature.

Figure 1 shows, as examples of the sensors 12, a sensor 12a which is a security camera and a sensor 12b which is an infrared trespasser sensor. The sensors 12a and 12b are mere examples. The sensors 12 may be any of the sensors in the above listing. Moreover, Besides, although Figure 1 shows only the sensor 12a and the sensor 12b provided in the local security system 3, many more sensors 12 may be provided in practice.

The sensors 12 are capable of plug and play operation with the security service manager terminal 10, as will be detailed later.

The security service manager terminal 10 supervises the entire security services available with the local security system 3. Notable functions of the security service manager terminal 10 are transmission of the information obtained by the sensors 12 to the outside observation monitor 7 and the user terminal 8 (sensor master function) and fee charging for the security services used by the user.

Specifically, as shown in Figure 1, the security service manager terminal 10 includes a sensor control section (sensor control means) 21, a service managing section 22, a data storage section 23, a sensor-end communications interface 24, a host-end communications interface 25, and a human/machine interface 26.

The sensor control section 21 receives detection signal outputs from the sensors 12 over the sensor network 11 which is a wireless communications network and transmits the detection signal to the outside observation monitor 7 and the user terminal 8 via the central device 5. Especially, the sensor control section 21 sends an alert signal to the observation monitor 7 and the user terminal 8 upon occurrence of an abnormality. The sensor control section 21 may transmit the detection signal outputs of the sensors 12 directly to the observation monitor 7 and the user terminal 8 without going through the central device 5.

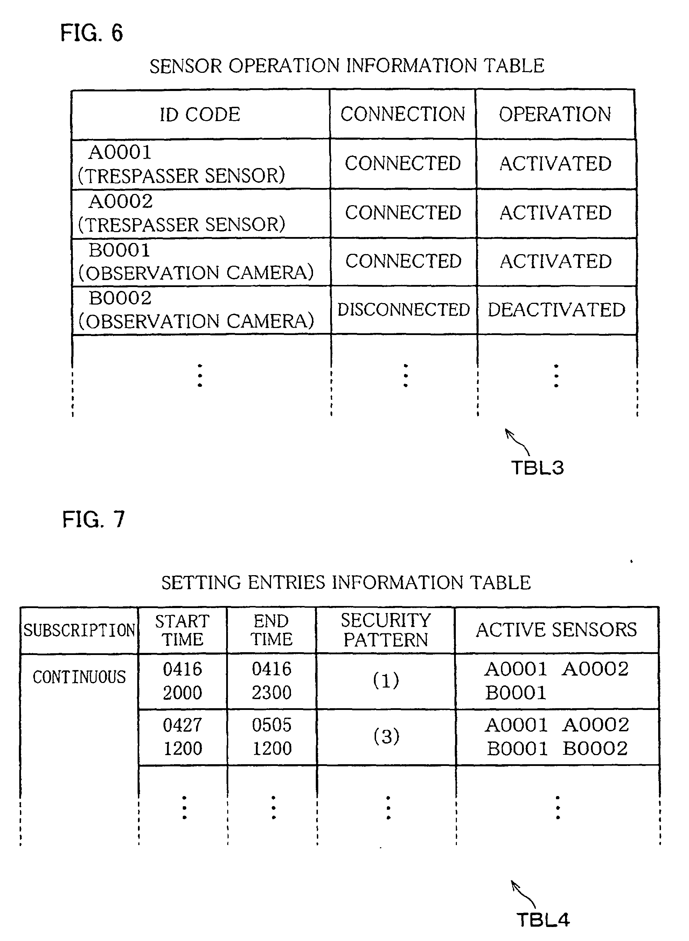

The sensor control section 21 operates the sensors 12 in accordance with an operation plan recorded in a setting entries information table TBL4 (Figure 7). Further, the sensor control section 21 can control the sensors 12 in accordance with instructions from the central device 5, the observation monitor 7, and the user terminal 8.

The sensor control section 21 also stores detection result outputs of the sensors 12. Specifically, an operation history recording section (history recording means) 21b records the operation history of the sensors 12 in the operation history table TBL5 in real time.

Further, the sensor control section 21 includes a sensor integration setup section 21a which sets up the connection of the sensors 12 to the security service manager terminal 10 and the central device 5 (i.e., the security service manager system 2) by plug and play. The sensor integration setup section 21a establishes a plug and play connection by obtaining ID codes from the sensors 12.

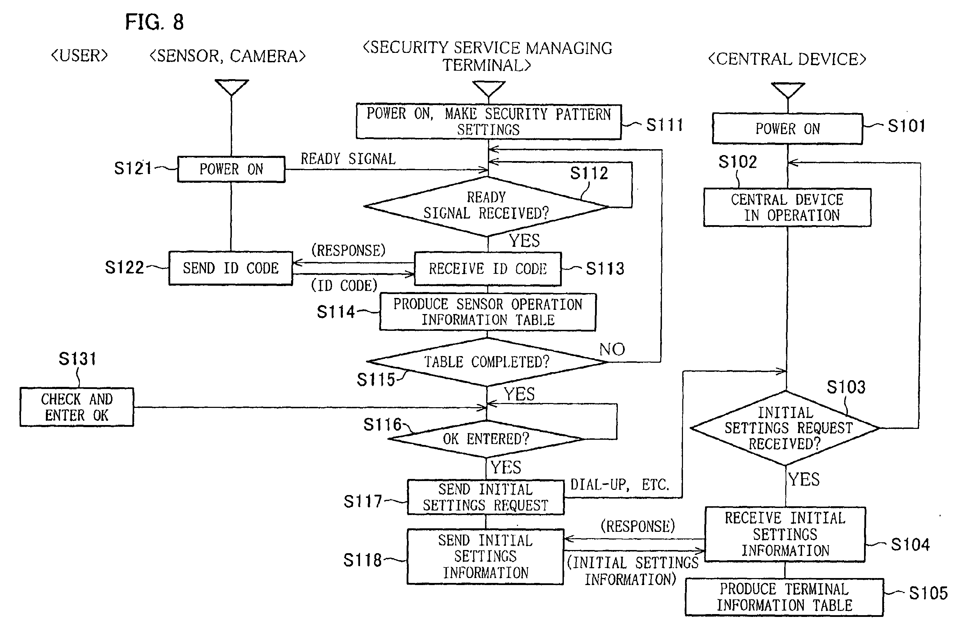

Now, referring to Figure 8, the start-up operation of the security service manager system 2 will be briefly described. The focus is on the plug and play connection of the sensors 12 to the security service manager terminal 10.

Referring to Figure 8, as the user installs and powers on the security service manager terminal 10 (S111), the security service manager terminal 10 automatically starts operation and stands by for a command input from the user and ready signals from the sensors and cameras (S112).

When the user installs and powers on the security camera 12a and the trespasser sensor 12b (S121), the security camera 12a and trespasser sensor 12b automatically start operation and transmit a ready signal to the security service manager terminal 10.

Upon receiving ready signals from the security camera 12a and the trespasser sensor 12b, the security service manager terminal 10 sends back a response signal. Having detected the signal, the security camera 12a and the trespasser sensor 12b transmit their own ID codes and operating conditions (S122). The ID codes of the sensors 12 are designated specific to sensor types/individual sensors (different ID codes for identical, but different sensors). When the sensor equipment is rented out, the rental business entity may specify the ID codes.

The security service manager terminal 10 receives ID codes and other information from the sensors 12 (S113) from which the terminal 10 automatically devises a sensor operation information table TBL3 (Figure 6) (S114). The security service manager terminal 10 repeats steps 112 to 114, registers all the sensors 12 with the sensor operation information table TBL3 (S115), displays so, and waits for confirmation by the user (S116).

When the user enters confirmation (S131), the security service manager terminal 10 dials up or otherwise connects to the central device 5 to transmit an initial setting request (S117).

Meanwhile, the central device 5 is powered on (S101) and performs various operations as a security monitoring center system (S102). Upon receiving the initial setting request from the security service manager terminal 10 (S103), the central device 5 returns a response signal. As the security service manager terminal 10 detects the return signal, the security service manager terminal 10 transmits initial setting information (S118).

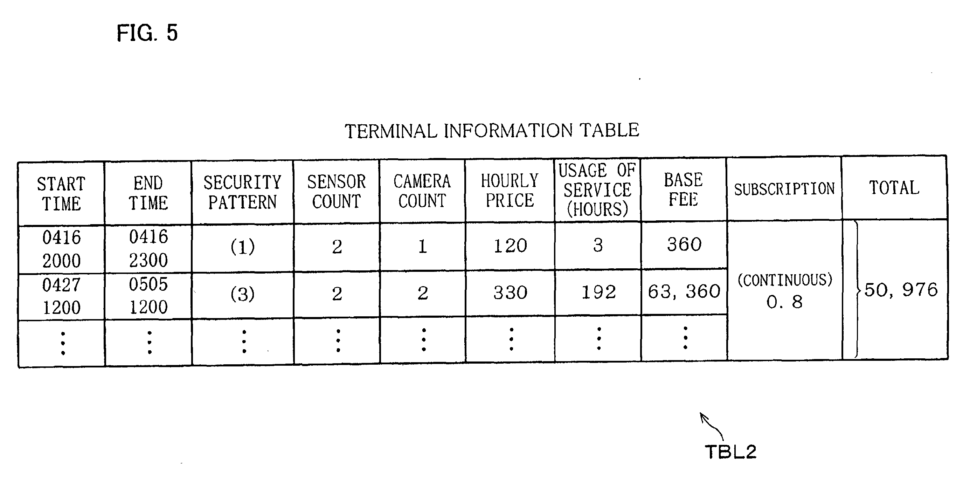

Based on the received initial setting information, the central device 5 devises a terminal information table TBL2 (Figure 5) that is necessary as the security monitoring center (S105) and incorporates the security service manager terminal 10 to the security system 1.

Steps 121, 122 and steps 112 to 118 are executed every time a sensor 12 is connected. Steps 121, 122 are executed by that sensor 12, and steps 112 to 118 by the security service manager terminal 10. More specifically, when a sensor 12 is connected to the security service manager terminal 10, the sensor integration setup section 21a registers that sensor 12 with the sensor operation information table TBL3 and notifies the central device 5. The central device 5 then sets up the terminal information table TBL2 based on the notification.

In this manner, the security service manager terminal 10 and the sensors 12 incorporated to the security system 1 through plug and play; the user can therefore attach equipment to the local security system 3. As a result, tasks in attaching the equipment are reduced. As soon as the user attaches the equipment, security services using that equipment can be immediately provided. Specifically, the security services involving the central device 5 are improved because of the central device 5 being capable of managing the sensors 12 individually. For example, the central device 5 can manage image data acquired using the security camera 12a and control the security camera 12a.

The service managing section 22 has a service setting section 22a and a service history reporting section 22b.

The service setting section (operation plan specifying means) 22a makes an operation plan setting for the sensors 12 and registers the setting with the setting entries information table TBL4 (Figure 7). Specifically, the service setting section 22a makes a sensor 12 ON/OFF plan setting under which the user can switch between the alert mode where the user receives security services and the non-alert mode where the user discontinue the security services when, for example, he is at home. Different settings can be made for different sensors 12. It is also possible, of course, to switch to alert mode immediately after the user makes such settings. The condition of the sensors 12 is tracked by the sensor integration setup section 21a to keep the sensor operation information table 3 TBL3 updated.

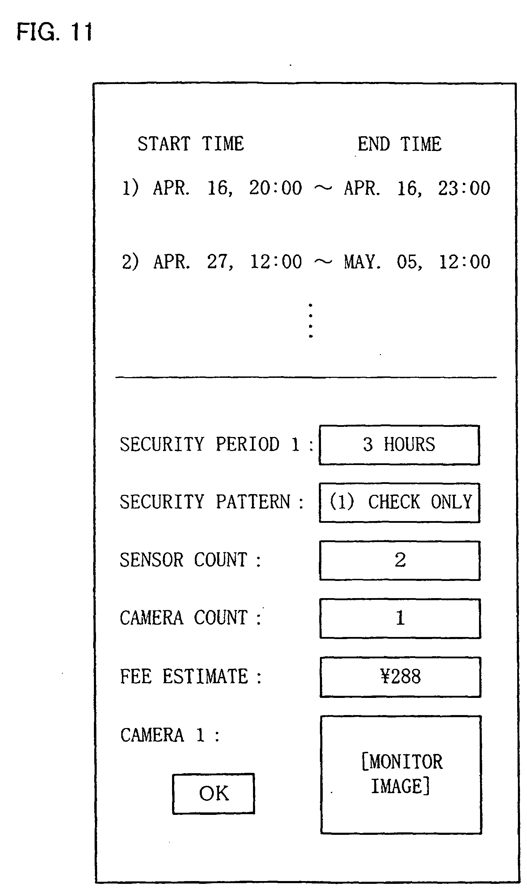

When the user specifies an operation plan through the human/machine interface 26, the service setting section (fee estimation means) 22a calculates fee estimates in accordance with inputs (service usage time [equal to the alert period upon estimation], security alert pattern, and sensor count) and displays the estimates (Figure 11). Thus, the user can simulate the use of security services in advance to check the fees. Through the service setting section 22a can be changed the subscription type, as well as the operation plan for the sensors 12.

The service history reporting section (service history reporting means) 22b transmits the operation history of the sensors 12 to central device 5 based on the operation history table TBL5 stored in the operation history recording section 21b. The transmission is carried out, for example, at the end of the alert period, that is, when the alert mode is switched off.

The sensor-end communications interface 24 performs wireless communications, for example, using RF (radio frequency) signals. The sensor-end communications interface 24 enables the sensor control section 21 to perform bidirectional data communications with the sensor 12 over the sensor network 11. The wireless communications scheme here may be, for example, a specified small power wireless communications system and a wireless LAN. Any other technology capable of wireless communications may be used. Examples include an IEEE 802.11 compatible wireless LAN and a Bluetooth (registered trademark) network.

The host-end communications interface 25 provides a communications interface with the public network 4: namely, telephone networks, mobile phone networks, packet communications networks, and PHSs.

The human/machine interface 26 provides an input means, such as a keyboard and a touch panel, and an output means such as an LCD (liquid crystal display).

The data storage section 23 stores the fee information table TBL1, the equipment operation information table TBL3, the setting entries information table TBL4, and the operation history table TBL5.

Referring to Figure 4, the fee information table TBL1 records predetermined, specific unit price and coefficient settings for use fee calculations. The calculations are done, for example, by a fee calculation section 52b (Figure 1) in the central device 5 or a fee calculation section 22c (Figure 12) in the security service manager terminal 10' (detailed later) using aforementioned equation (1).

Referring next to Figure 6, the equipment operation information table TBL3 records the ID codes and the connecting and operating condition settings for the sensors 12 connected to the security service manager terminal 10. The ID codes identify the sensors 12 in the security service manager system 2. The connecting condition setting indicates whether the sensor 12 is connected operatively to the security service manager terminal 12. The operating condition setting indicates whether the sensor 12 is turned on/off.

Referring to Figure 7, the setting entries information table TBL4 records start time, end time, security alert pattern, and active sensor settings as a security service plan under which the sensors 12 operate. The security alert pattern setting indicates, for example, one of aforementioned security alert patterns 1 to 3 determining specific services offered. The active sensor setting identifies the sensors 12, by their ID codes, which are actually used in the security operation.

In addition, as shown in Figure 1, the central device 5 include a detection signal transfer section 51, a terminal managing section 52, a data storage section 53, a terminal-end communications interface 54, and a monitor-end communications interface 55.

The detection signal transfer section 51 receives a signal indicative of the detection of the sensor 12 from the sensor control section 21 and transmits the signal to the outside observation monitor 7 and the user terminal 8 among others. The detection signal transfer section 51 receives a request to control the sensors 12 from the observation monitor 7 and the user terminal 8 among others and transmits to the sensor control section 21.

The terminal managing section 52 manages data related to security services for each security service manager terminal 10. The terminal managing section 52 includes a service history managing section 52a, a fee calculation section 52b, and a fee collection section 52c.

The service history managing section 52a updates the terminal information table TBL2 (Figure 5) on the basis of the operation history of the sensors 12 received from the service history reporting section 22b for each alert period.

The fee calculation section (fee calculation means) 52b calculates fees in reference to the fee information table TBL1 based on the operation history of the sensors 12 recorded in the terminal information table TBL2 by the service history managing section 52a and records the calculations in the terminal information table TBL2. To display fee estimates on the security service manager terminal 10 or the user terminal 8, the operation plan may be transmitted to the central device 5 so that the fee calculation section 52b can calculate the estimates for display.

The fee collection section 52c handles processes related to the payment of outstanding bills through credit cards, prepaid cards, e-money, cash, etc. Data on outstanding bills is recorded in the terminal information table TBL2 by the fee calculation section 52b.

For example, the fee collection section 52c transmits/mails bills to users. Alternatively, a fee collection device 27 (detailed later; see Figure 12) may be provided to the security service manager terminal 10 so that fees can be collected at the security service manager terminal 10 according to instructions from the fee collection section 52c. In this alternative configuration, the fee calculation section 52b and the fee collection section 52c are provided in the central device 5;fee data is again collected and managed at one place, giving high level of security and preventing illegal use.

The data storage section 53 stores the fee information table TBL1 and the terminal information table TBL2. The fee information table TBL1 (Figure 4) is identical to the table stored in the data storage section 23 in the security service manager terminal 10.

Referring to Figure 5, the terminal information table TBL2 records settings related to alert mode: i.e., start time, end time, security alert pattern, active sensor count, camera count, service usage time, basic fees, subscription coefficient, and fee total settings. The service usage time setting indicates the length of time in which security services were used and calculated from the start and end time settings. The basic fees setting indicates the fees before the multiplication by the subscription type coefficient in equation (1). The fee total setting indicates the amount of unpaid fees for each terminal information table TBL2. The terminal information table TBL2 displayed on the user terminal 8 by the terminal managing section 52 or on the human/machine interface 26 by the service managing section 22 in accordance with a request from the user or other people.

The terminal-end communications interface 54 provides a communications interface with the public network 4; namely, telephone networks, mobile phone networks, packet communications networks, and PHSs.

The monitor-end communications interface 55 provides a communications interface with the Internet 6.

As mentioned above, in the security service manager system 2, the operation history of the sensor 12 (start and end times of security operation, security alert pattern, sensor count, and camera count) is transferred to the operation history recording section 21b, the service history reporting section 22b, and the service history managing section 52a in this order, so as to calculate fees from service usage time using equation (1). The condition of the sensor 12 is obtainable from the sensor operation information table TBL3. The service setting section 22a separately transmits the subscription type to the service history managing section 52a when the subscription is renewed. Thus, the security service manager system 2 can calculate fees in accordance with the length of time security monitoring was actually performed.

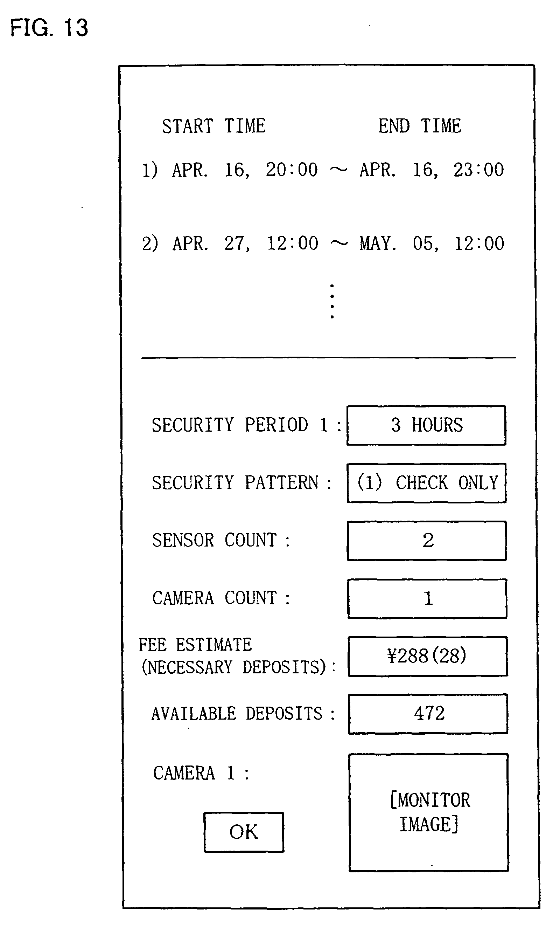

The security service manager terminal 10 (10' (Figure 13)) may be built from a general-purpose computer. The central device 5 (5' (Figure 13)) may be built from a workstation, personal computer, or other general-purpose computer. In other words, the security service manager terminal 10 (10') and the central device 5 (5')each contain a CPU (central processing unit) executing instructions of a computer program (security service manager program) realizing its functions; a ROM (read only memory) storing boot logic; a RAM (random access memory) to load the computer program; a hard disk or like storage device (storage medium) storing the computer program and various data; input devices, such as a keyboard, a mouse, and a touch panel,; output devices, such as a monitor and speakers; and communications equipment for communications with other devices. The information deliver program is recorded on a medium, such as a floppy (registered trademark) disc, hard disk, magnetism tape, CD-ROM, optical disc, magneto-optical disc, or MD, or in a ROM/RAM memory so that the program can be read by a computer.

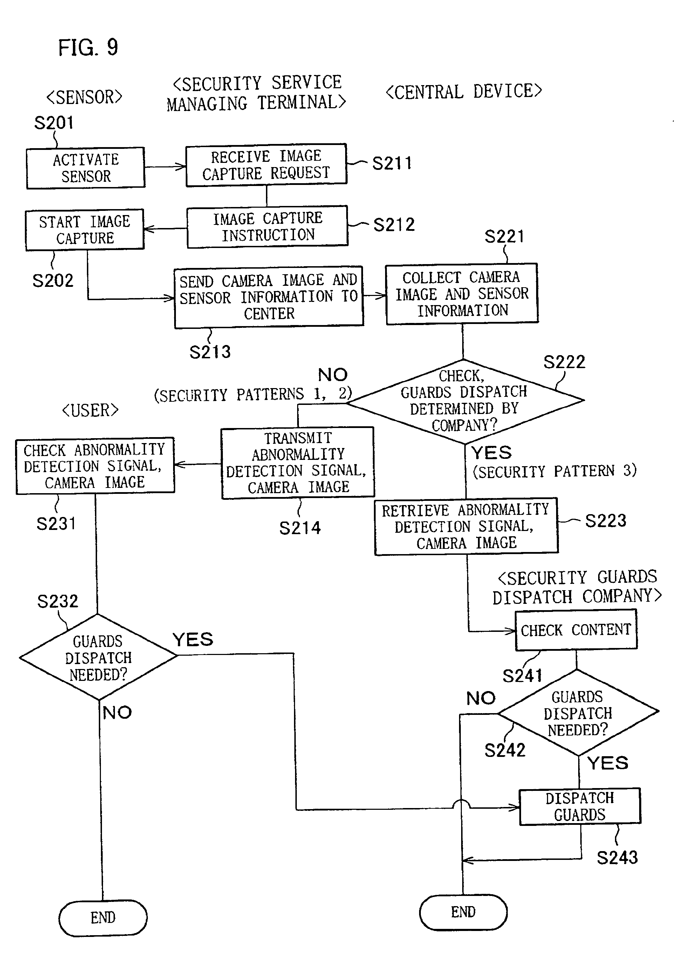

Next, referring to Figure 9 to Figure 12, the operation of the security system 1 will be described.

Figure 9 is a flow chart illustrating the alert mode process of the security system 1.

Under the control of the sensor control section 21 based on the setting entries information table TBL4 (Figure 7), the trespasser sensor 12b switches from standby to alert mode to perform security monitoring at the security operation start time (S201). The trespasser sensor 12b is activated around the clock; upon detection of an abnormality, it sends a detection signal to the sensor control section 21 to request that the security camera 12a start operating.

The sensor control section 21, as it receives the operation start request for the security camera 12a from the trespasser sensor 12b (S211), sends a camera image capture instruction to the security camera 12a (S212). In accordance with the instruction, the security camera 12a starts image capturing and sends captured camera images. The sensor control section 21 transmits the camera image and the sensor information received from the security camera 12a and the trespasser sensor 12b to the central device 5 (S213).

Next, the central device 5 accumulates the camera image and sensor information received from the sensor control section 21 (S222) and performs a predetermined security alert pattern operation based on the security alert pattern information given by the user.

Specifically, to implement security alert pattern 1 or 2 (NO in S222), an abnormality notification and a camera image are transmitted to the mobile terminal/telephone which is the user terminal 8 of the user (S214). If there is a security guard dispatch request from the user having confirmed the information (S231, S232), security guards are dispatched (S243). To implement security alert pattern 3 (YES in S222), an abnormality notification and a camera image are transmitted to the observation monitor 7 of a security guard dispatch company (S223). If an operator, having confirmed the information, decides that security guards be dispatched (S241, S242), security guards are dispatched (S243).

In step 232, if the user wishes that security guards be dispatched when the operation plan indicates security alert pattern 1, the user may change the plan to security alert pattern 2. Alternatively, no change to the security alert pattern is allowed once security operation is started, while giving an optional service of dispatching security guards.

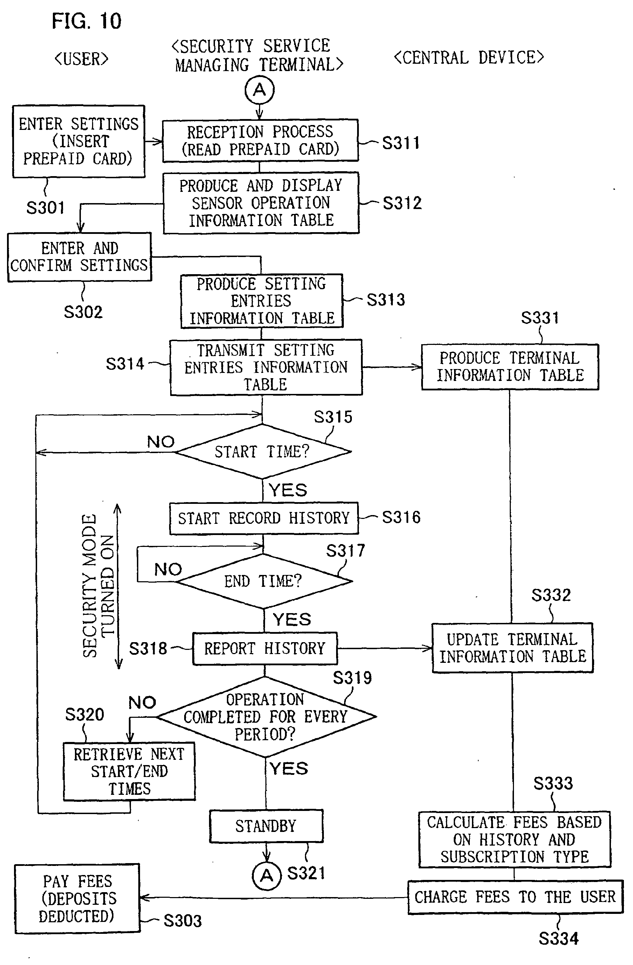

Figure 10 is a flow chart illustrating processing in the security service manager terminal 10 and the central device 5.

First, the user installs various security equipment (security service manager terminal 10, security camera 12a, trespasser sensor 12b) constituting the local security system 3 at target monitoring sites. Then, the user enters the security operation start/end time, security alert pattern, and other settings through the human/machine interface 26 (S301).

As the service setting section 22a receives the setting information as entered by the user (S311), the sensor integration setup section 21a checks the condition of the sensor 12 to produce the sensor operation information table TBL3 and display the connection/operation condition of the sensor 12 on the human/machine interface 26 (S312). From the available sensors on display, the user selects a sensor, a camera, etc. for use in a security operation. The user then checks the security operation plan (sensor operation plan) (S302). At this time, the human/machine interface 26 displays, the estimated fees calculated by the service setting section 22a in reference to the fee information table TBL1. See Figure 11. A set of alert periods may be specified in the security operation plan at once.

As the user confirms the entered settings and enters "OK," the service setting section 22a produces the setting entries information table TBL4 based on the setting information as entered by the user (S313) and transmits the table TBL4 to the service history managing section 52a in the central device 5 (S314). The service history managing section 52a then automatically produces various tables, including the terminal information table TBL2, which are necessary for the system based on the information on the setting entries information table TBL4 transmitted from the service history reporting section 22b (S331).

The security service manager terminal 10 sets the setting entries information table TBL4 and thereafter switches to standby for alert mode (alert mode turned off). At the security operation start time of the first alert period t1 (S315), the sensor control section 21 activates the sensor 12, and the operation history recording section 21b starts recording history (S316). Thereafter, at the specified security operation end time (S317), the sensor control section 21 deactivates the sensor 12, and the service history reporting section 22b retrieves the operation history of the sensor 12 from the operation history table TBL5 for transmission to the service history managing section 52a (S318). The security service manager terminal 10 then obtains the start time of a next alert period and switches to standby (S320). The security service manager terminal 10 repeats the alert mode on/off operation (S315 to S318) until there is no more alert period ti (i = 1 to n) specified in the sensor operation information table TBL3 (S319).

In contrast, the central device 5 updates the terminal information table TBL2 produced in step 331 by the service history managing section 52a every time it receives a history report from the service history reporting section 22b (S332). For each update, the fee calculation section 52b calculates fees based on the history in accordance with the subscription type using equation (1) (S333). Further, the fee collection section 52c changes the user an amount equal to the fees at an appropriate timing (S334) to collect the payment from the user (S303). The fee collection section 52c may charge the user when there is no more planned alert period, for each alert period, once every two periods, or once per predetermined unit period.

If the user makes an instruction to alter the security operation plan, the process always returns to the step S312 to alter the setting entries information table TBL4. The service setting section 22a displays an equipment removal plan on the human/machine interface 26 when the subscription soon expires.

Figure 11 is a screen shot, as an example, of the human/machine interface 26 in the security service manager terminal 10 when the user makes a security operation plan.

As shown in Figure 11, the start time, the end time, and the security alert pattern, items necessary to produce the setting entries information table TBL4, are displayed waiting for entries. The numbers of sensors/cameras selected by the user on a sensor/camera selection screen (not shown) appear next to "Sensor Count" and "Camera Count." The video as shot with the security camera 12a which will be used is displayed on a monitor. An alert period is calculated from the start time and the end time for display. Based on the alert period and other setting entry information, a fee estimate is calculated and displayed referring to the fee information table TBL1.

As in the foregoing, the security service manager system 2 lets the user handle all the processing up to the start of the services, hence requires no staff to attend the central device 5. The system 2 thus greatly reduces the time and cost over conventional systems. In addition, since fees are charged on the basis of history, hourly security services based on detailed fees settings are realized which were impossible with conventional systems.

Figure 12 is a schematic functional block diagram illustrating another configuration of the security service manager system 2, where the security service manager terminal 10 calculates and collects fees. The following description will focus differences from the configuration in Figure 1.

As shown in Figure 12, the security service manager terminal 10' has the same configuration as the security service manager terminal 10 except that the former additionally contains a fee collection device 27 and also that the service managing section 22 additionally contains a fee calculation section 22c and a fee collection section 22d. Compared with the central device 5, the central device 5' lacks the fee calculation section 52b and the fee collection section 52c in the terminal managing section 52 and the fee information table TBL1 in the data storage section 53.

The fee calculation section (fee calculation means) 22c performs almost identical processing as the fee calculation section 52b (Figure 1). Specifically, the fee calculation section 22c calculates fees based on the operation history of the sensor 12 which is retrieved from the operation history table TBL5. Thus, the user is charged only the fees for the services actually rendered.

The fee collection section (fee collection means) 22d collects the fees calculated by the fee calculation section 22c through the fee collection device 27. The security service manager terminal 10' accommodates a prepaid card device as the fee collection device 27. The fee collection device 27, if suitably selected, can collect fees through IC cards, e-money, and in cash, etc.

The operation of the security service manager terminal 10' and the central device 5' is almost identical to the operation described in reference to Figure 10. Differences, however, do exist: (i) In step S301, the fee collection section 22d reads the remaining deposits charged on the prepaid card in the fee collection device 27. (ii) In step S303, the fee collection section 22d deducts the fees from the deposits on the prepaid card in the fee collection device 27.

(iii) The fee collection section 22d checks the remaining deposits on the prepaid card at appropriate timings where necessary and when it detects an insufficient deposits, displays a message requesting an additional prepaid card on the human/machine interface 26. The message may be displayed on the user terminal 8 too. When the prepaid card has no more deposits, and a request for another card is followed by no insertion of a new card, the security operation may immediately be suspended. Alternatively, the security operation may be continued at increased fees.

Figure 13 is a screen shot, as an example, of the human/machine interface 26 in the security service manager terminal 10' when the user makes a security operation plan.

As shown in Figure 13, the display produced by the security service manager terminal 10' is almost identical to the one in Figure 11 except that it displays the currently remaining deposits and also that it displays a fee estimate along with the deposit count corresponding to the fee estimate.

In this manner, the security service manager terminal 10' can collect fees through a prepaid card, a service not available with conventional security systems. The user may readily buy prepaid cards at a supermarket, for example, whereas the security services company can collect fees before actually rendering services.

In addition, information other than the remaining deposits may simultaneously be read from the prepaid card for use in security services.

Alternatively, with no fee collection device 27 contained in the security service manager terminal 10', the fee collection section 22d may directly access a computer of a credit card company, for example, to make necessary transactions to charge on the user's credit card. Further, if the sensor control section 21 directly sends a detection signal to the observation monitor 7 or the user terminal 8, the central device 5 can be omitted.

The security service managing method in accordance with the present invention may include: the sensor control step of obtaining a detection signal from a sensor and transmitting the signal to a monitor device; the history recording step of recording operation history of the sensor; and the fee calculation step of calculating fees from the operation history.

According to the method, the security services fees can be calculated from the operation history of the sensor used for the security services. Therefore, the user is charged fees based on his usage of the services. The sensor operation history giving a fee calculation basis may be any one of the length of time the sensor was in active operation, the number of transmitted images, and other information, or any combination of such information. Therefore, the security service managing method provides home and other security services by a usage-based fee system.

The security service managing method in accordance with the present invention may further include the operation plan specifying step of specifying an operation plan for the sensor, wherein the sensor control step includes a sub-step of operating the sensor in accordance with the operation plan.

According to the method, further in the security services, the sensor is operated in accordance with an operation plan specified in advance by the user. Besides, the user is charged fees based on his usage of the services based on the operation history of the active sensor; a completely usage-based fee system is possible with a discrete security operation schedule. Therefore, the security service managing method provides on-demand home and other security services by a usage-based fee system.

The security service managing method in accordance with the present invention may include the fee estimation step of calculating and presenting a fee estimate from the operation plan.

According to the method, a fee estimate can be presented based on the operation plan for the sensor. Thus, the user can first check the fees which will be charged if he receives security services in accordance with the specified operate plan, before confirming the operate plan.

The security service managing method in accordance with the present invention may include the fee collection step of collecting the fees calculated in the fee calculation step using a fee collection device.

According to the method, fees can be collected through a prepaid card, e-money, cash, a credit card, etc. using a suitable fee collection device. Therefore, the security service managing method can efficiently collect fees at the very site where security services are provided.

In addition, the security service manager system in accordance with the present invention includes a security service manager terminal and a central device. The security service manager terminal includes: sensor control means for transmitting a detection signal obtained from a sensor to a monitor device; history recording means for recording operation history of the sensor; and history reporting means for transmitting the operation history to the central device. The central device includes fee calculation means for calculating fees from the operation history of the sensor received from the security service manager terminal.

According to the arrangement, the security services fees can be calculated from the operation history of the sensor used for the security services. Therefore, the user is charged fees based on his usage of the services. The sensor operation history giving a fee calculation basis may be any one of the length of time the sensor was in active operation, the number of transmitted images, and other information, or any combination of such information. Therefore, the security service manager system provides home and other security services by a usage-based fee system.

The security service manager system in accordance with the present invention may be such that the security service manager terminal further includes operation plan specifying means for specifying an operation plan for the sensor, and the sensor control means causes the sensor to operate in accordance with the operation plan.

According to the arrangement, further in the security services, the sensor is operated in accordance with an operation plan specified in advance by the user. Besides, the user is charged fees based on his usage of the services based on the operation history of the active sensor; a completely usage-based fee system is possible with a discrete security operation schedule. Therefore, the security service manager system provides on-demand home and other security services by a usage-based fee system.

The security service manager system in accordance with the present invention may be such that the security service manager terminal further includes fee estimation means for calculating and presenting a fee estimate from the operation plan.

According to the arrangement, a fee estimate can be presented based on the operation plan for the sensor. Thus, the user can first check the fees which will be charged if he receives security services in accordance with the specified operate plan, before confirming the operate plan.

The security service manager system in accordance with the present invention may further include a fee collection device, and fee collection means for collecting the fees calculated by the fee calculation means using the fee collection device.

According to the arrangement, fees can be collected through a prepaid card, e-money, cash, a credit card, etc. using a suitable fee collection device. Therefore, the security service manager system can efficiently collect fees at the very site where security services are provided.

A security service manager terminal in accordance with the present invention may include: sensor control means for transmitting a detection signal obtained from a sensor to a monitor device; history recording means for recording operation history of the sensor; and history reporting means for transmitting the operation history recorded by the history recording means to a central device including fee calculation means for calculating fees from the operation history.

According to the arrangement, the security services fees can be calculated in the central device from the operation history of the sensor connected to the security service manager terminal used for the security services. Therefore, the user is charged fees based on his usage of the services. The sensor operation history giving a fee calculation basis may be any one of the length of time the sensor was in active operation, the number of transmitted images, and other information, or any combination of such information. Therefore, the security service manager terminal provides home and other security services by a usage-based fee system.

Another security service manager terminal in accordance with the present invention may include: sensor control means for transmitting a detection signal obtained from a sensor to a monitor device; history recording means for recording operation history for the sensor; fee calculation means for calculating fees from the operation history; a fee collection device; and fee collection means for collecting the fees calculated by the fee calculation means using the fee collection device.

According to the arrangement, fees can be collected through a prepaid card, e-money, cash, a credit card, etc. using a suitable fee collection device. Therefore, the security service manager terminal can single-handedly implement the fee calculation and collection functionality, as well as the obtaining and transmitting of the detection signal from the sensor. As a result, fees can be collected efficiently at the very site where security services are provided.

The security service manager terminal in accordance with the present invention may further include operation plan specifying means for specifying an operation plan for the sensor, wherein the sensor control means causes the sensor to operate in accordance with the operation plan.

According to the arrangement, further in the security services, the sensor is operated in accordance with an operation plan specified in advance by the user. Besides, the user is charged fees based on his usage of the services based on the operation history of the active sensor; a completely usage-based fee system is possible with a discrete security operation schedule. Therefore, the security service manager terminal provides on-demand home and other security services by a usage-based fee system.

The security service manager terminal in accordance with the present invention may further include fee estimation means for calculating and presenting a fee estimate from the operation plan.

According to the arrangement, a fee estimate can be presented based on the operation plan for the sensor. Thus, the user can first check the fees which will be charged if he receives security services in accordance with the specified operate plan, before confirming the operate plan.

A security service manager program in accordance with the present invention is a computer program causing a computer to function as each of the means in the security service manager system.

According to the arrangement, each of the means in the security service manager system, hence the security service manager system, is realized on a computer. Therefore, the aforementioned home and other security services, an advantage of the security service manager system, is provided on demand and by a usage-based fee system.

Another security service manager program in accordance with the present invention is a computer program causing a computer to function as each of the means in the security service manager terminal.

According to the arrangement, each of the means in the security service manager terminal, hence the security service manager terminal, is realized on a computer. Therefore, the aforementioned home and other security services, an advantage of the security service manager terminal, is provided on demand and by a usage-based fee system.

The computer-readable storage medium containing the security service manager program in accordance with the present invention contains a security service manager program which enables each of the means in the security service manager system or the security service manager terminal to be realized on a computer and which manipulates the security service manager system or the security service manager terminal.

According to the arrangement, the security service manager program, read from the storage medium, realizes the security service manager system or the security service manager terminal on a computer.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

INDUSTRIAL APPLICABILITY

The security service manager system in accordance with the present invention is capable of providing on-demand security services at usage-based rates and suitable for home security services where the user can readily install devices only when he needs them, and quickly start using the services, for example, until children have grown up in a nuclear family and when the parents are out of home or the family is on an overseas travel.

**Claims**

1. A security service managing method, comprising:

   the sensor control step of obtaining a detection signal from a sensor and transmitting the signal to a monitor device;
   the history recording step of recording operation history of the sensor; and
   the fee calculation step of calculating fees from the operation history.

2. The security service managing method as set forth in claim 1, further comprising the operation plan specifying step of specifying an operation plan for the sensor,
   wherein the sensor control step includes a sub-step of operating the sensor in accordance with the operation plan.

3. The security service managing method as set forth in claim 2, further comprising the fee estimation step of calculating and presenting a fee estimate from the operation plan.

4. The security service managing method as set forth in any one of claims 1 through 3, wherein the fees calculated in the fee calculation step is collected using a fee collection device.

5. A security service manager system, comprising a security service manager terminal and a central device,
   the security service manager terminal including: sensor control means for transmitting a detection signal obtained from a sensor to a monitor device; history recording means for recording operation history of the sensor; and history reporting means for transmitting the operation history to the central device,
   the central device including fee calculation means for calculating fees from the operation history of the sensor received from the security service manager terminal.

6. The security service manager system as set forth in claim 5, wherein the security service manager terminal further includes operation plan specifying means for specifying an operation plan for the sensor, and the sensor control means causes the sensor to operate in accordance with the operation plan.

7. The security service manager system as set forth in claim 6, wherein the security service manager terminal further includes fee estimation means for calculating and presenting a fee estimate from the operation plan.

8. The security service manager system as set forth in any one of claims 5 through 7, further comprising: a fee collection device; and fee collection means for collecting the fees calculated by the fee calculation means using the fee collection device.

9. A security service manager terminal, comprising:

   sensor control means for transmitting a detection signal obtained from a sensor to a monitor device;
   history recording means for recording operation history of the sensor; and
   history reporting means for transmitting the operation history recorded by the history recording means to a central device including fee calculation means for calculating fees from the operation history.

**10.** A security service manager terminal, comprising:

sensor control means for transmitting a detection signal obtained from a sensor to a monitor device;
history recording means for recording operation history for the sensor;
fee calculation means for calculating fees from the operation history;
a fee collection device; and
fee collection means for collecting the fees calculated by the fee calculation means using the fee collection device.

**11.** The security service manager terminal as set forth in either one of claims 9 and 10, further comprising operation plan specifying means for specifying an operation plan for the sensor, wherein the sensor control means causes the sensor to operate in accordance with the operation plan.

**12.** The security service manager terminal as set forth in claim 11, further comprising fee estimation means for calculating and presenting a fee estimate from the operation plan.

**13.** A security service manager program causing a security service manager system as set forth in any one of claims 5 through 8 to operate, said program causing a computer to function as each of said means.

**14.** A security service manager program causing a security service manager terminal as set forth in any one of claims 9 through 12 to operate, said program causing a computer to function as each of said means.

**15.** A computer-readable storage medium containing the security service manager program as set forth in either one of claims 13 and 14.

FIG. 1

# FIG. 2

3:LOCAL SECURITY SYSTEM

(SECURITY GUARD DISPATCH COMPANY) OBSERVATION MONITOR — 7

12:SENSOR
12:SENSOR
12:SENSOR

11

TBL3

SECURITY CAMERA

12

(WIRELESS) SENSOR NETWORK

12

SECURITY SERVICE MANAGER TERMINAL

SENSOR OPERATION INFORMATION TABLE

SETTING ENTRIES INFORMATION TABLE

OPERATION HISTORY TABLE

TBL4  TBL5  23

PUBLIC NETWORK

TELEPHONE NETWORK, MOBILE PHONE NETWORK, PACKET COMMUNICATIONS NETWORK, PHS
⋮

4

5

CENTRAL DEVICE (SECURITY SERVICES COMPANY)

FEE INFORMATION TABLE  TBL1

TERMINAL INFORMATION TABLE  TBL2

53

6

INTERNET

8:USER TERMINAL

8:USER TERMINAL

2:SECURITY SERVICE MANAGER SYSTEM

3:LOCAL SECURITY SYSTEM

1:SECURITY SYSTEM

EP 1 498 832 A1

# FIG. 3

SECURITY MODE OFF

SECURITY MODE ON

$t_1$  $t_2$  $t_n$

▲ EQUIPMENT INSTALLED

△ EQUIPMENT REMOVED

▲  △

t

MULTIPLE-PERIOD SUBSCRIPTION

SINGLE-PERIOD SUBSCRIPTION

CONTINUOUS SUBSCRIPTION
(SECURITY MODE MAY BE TURNED ON MORE THAN ONCE,
NO EQUIPMENT IS REMOVED)

EP 1 498 832 A1

## FIG. 4

### FEE INFORMATION TABLE

| SECURITY PATTERN / HOUR | SENSOR FEE PER SENSOR | SUBSCRIPTION (COEFFICIENT) |
|---|---|---|
| (CHECKED BY USER)<br>(1)  ¥100 | (TRESPASSER SENSOR)<br>¥5 | (SINGLE)<br>1. 0 |
| (CHECKED BY USER,  GUARDS DISPATCHED)<br>(2)  ¥200 | (OBSERVATION MONITOR)<br>¥10 | (MULTIPLE)<br>0. 9 |
| (USER NEEDS NO ACTION)<br>(3)  ¥300 |  | (CONTINUOUS)<br>0. 8 |

TBL1

## FIG. 5

TERMINAL INFORMATION TABLE

| START TIME | END TIME | SECURITY PATTERN | SENSOR COUNT | CAMERA COUNT | HOURLY PRICE | USAGE OF SERVICE (HOURS) | BASE FEE | SUBSCRIPTION | TOTAL |
|---|---|---|---|---|---|---|---|---|---|
| 0416 2000 | 0416 2300 | (1) | 2 | 1 | 120 | 3 | 360 | (CONTINUOUS) 0. 8 | 50, 976 |
| 0427 1200 | 0505 1200 | (3) | 2 | 2 | 330 | 192 | 63, 360 | | |
| ⋮ | ⋮ | ⋮ | ⋮ | ⋮ | ⋮ | ⋮ | ⋮ | | |

TBL2

EP 1 498 832 A1

## FIG. 6

SENSOR OPERATION INFORMATION TABLE

| ID CODE | CONNECTION | OPERATION |
|---|---|---|
| A0001 (TRESPASSER SENSOR) | CONNECTED | ACTIVATED |
| A0002 (TRESPASSER SENSOR) | CONNECTED | ACTIVATED |
| B0001 (OBSERVATION CAMERA) | CONNECTED | ACTIVATED |
| B0002 (OBSERVATION CAMERA) | DISCONNECTED | DEACTIVATED |
| ⋮ | ⋮ | ⋮ |

TBL3

## FIG. 7

SETTING ENTRIES INFORMATION TABLE

| SUBSCRIPTION | START TIME | END TIME | SECURITY PATTERN | ACTIVE SENSORS |
|---|---|---|---|---|
| CONTINUOUS | 0416 2000 | 0416 2300 | (1) | A0001  A0002 B0001 |
|  | 0427 1200 | 0505 1200 | (3) | A0001  A0002 B0001  B0002 |
|  | ⋮ | ⋮ | ⋮ | ⋮ |

TBL4

## FIG. 8

\<USER\> \<SENSOR, CAMERA\> \<SECURITY SERVICE MANAGING TERMINAL\> \<CENTRAL DEVICE\>

S111 — POWER ON, MAKE SECURITY PATTERN SETTINGS

S101 — POWER ON

S121 — POWER ON → READY SIGNAL

S102 — CENTRAL DEVICE IN OPERATION

S112 — READY SIGNAL RECEIVED? YES

S122 — SEND ID CODE ← (RESPONSE) / (ID CODE) → RECEIVE ID CODE — S113

S114 — PRODUCE SENSOR OPERATION INFORMATION TABLE

S115 — TABLE COMPLETED? NO / YES

S131 — CHECK AND ENTER OK

S116 — OK ENTERED? YES

S103 — INITIAL SETTINGS REQUEST RECEIVED? YES

S117 — SEND INITIAL SETTINGS REQUEST → DIAL-UP, ETC.

S118 — SEND INITIAL SETTINGS INFORMATION ← (RESPONSE) / (INITIAL SETTINGS INFORMATION) → RECEIVE INITIAL SETTINGS INFORMATION — S104

S105 — PRODUCE TERMINAL INFORMATION TABLE

EP 1 498 832 A1

## FIG. 9

<SENSOR>  <SECURITY SERVICE MANAGING TERMINAL>  <CENTRAL DEVICE>

S201

```
┌──────────────┐      ┌──────────────────┐
│   ACTIVATE   │─────▶│  RECEIVE IMAGE   │── S211
│    SENSOR    │      │ CAPTURE REQUEST  │
└──────────────┘      └──────────────────┘
                              │
┌──────────────┐      ┌──────────────────┐
│ START IMAGE  │◀─────│  IMAGE CAPTURE   │── S212
│   CAPTURE    │      │   INSTRUCTION    │
└──────────────┘      └──────────────────┘
        │
       S202
```

```
        ┌─────────────────────┐      ┌─────────────────────┐
        │ SEND CAMERA IMAGE AND│      │  COLLECT CAMERA      │
        │ SENSOR INFORMATION TO│─────▶│  IMAGE AND SENSOR    │  S221
        │       CENTER         │      │   INFORMATION        │
        └─────────────────────┘      └─────────────────────┘
                  S213                          │
```

<USER>

```
   NO
(SECURITY PATTERNS 1, 2)          ◇ CHECK,            ◇  S222
                                    GUARDS DISPATCH
                                    DETERMINED BY
                                    COMPANY?

┌─────────────────────┐      ┌──────────────────┐
│ CHECK ABNORMALITY   │◀─────│   TRANSMIT       │
│ DETECTION SIGNAL,   │      │  ABNORMALITY     │
│   CAMERA IMAGE      │      │ DETECTION SIGNAL,│
└─────────────────────┘      │  CAMERA IMAGE    │
        S231                 └──────────────────┘
                                    S214
```

YES
(SECURITY PATTERN 3)

```
                                  ┌─────────────────────┐
                                  │ RETRIEVE ABNORMALITY│── S223
                                  │ DETECTION SIGNAL,   │
                                  │   CAMERA IMAGE      │
                                  └─────────────────────┘
```

<SECURITY GUARDS DISPATCH COMPANY>

```
S232                              ┌──────────────────┐
                                  │  CHECK CONTENT   │
     ◇ GUARDS         YES          └──────────────────┘
       DISPATCH  ──────────┐           S241
       NEEDED?             │
                          │       NO    ◇ GUARDS
       NO                 │              DISPATCH
                          │      S242    NEEDED?
                          │
                          │              YES
                          │       ┌──────────────────┐
                          └──────▶│    DISPATCH      │
                                  │     GUARDS       │
                                  └──────────────────┘
                                          S243
```

```
     (  END  )                         (  END  )
```

## FIG. 10

<USER>     <SECURITY SERVICE MANAGING TERMINAL>     <CENTRAL DEVICE>

(A)

| ENTER SETTINGS (INSERT PREPAID CARD) | → | RECEPTION PROCESS (READ PREPAID CARD) | S311 |

S301

| | PRODUCE AND DISPLAY SENSOR OPERATION INFORMATION TABLE | S312 |

| ENTER AND CONFIRM SETTINGS |

S302

| PRODUCE SETTING ENTRIES INFORMATION TABLE | S313 |

S331

| S314 | TRANSMIT SETTING ENTRIES INFORMATION TABLE | → | PRODUCE TERMINAL INFORMATION TABLE |

S315

START TIME? — NO

YES

START RECORD HISTORY — S316

SECURITY MODE TURNED ON

S317

END TIME? — NO

S332

YES

| S318 | REPORT HISTORY | → | UPDATE TERMINAL INFORMATION TABLE |

S319

OPERATION COMPLETED FOR EVERY PERIOD? — NO

S320

| RETRIEVE NEXT START/END TIMES |

YES

S333

| CALCULATE FEES BASED ON HISTORY AND SUBSCRIPTION TYPE |

| STANDBY |

(A) S321

| PAY FEES (DEPOSITS DEDUCTED) | ← | CHARGE FEES TO THE USER |

S303

S334

## FIG. 11

```
      START TIME              END TIME

1) APR. 16, 20:00 ~ APR. 16, 23:00


2) APR. 27, 12:00 ~ MAY. 05, 12:00

                    ⋮
```

SECURITY PERIOD 1 : | 3 HOURS

SECURITY PATTERN : | (1) CHECK ONLY

SENSOR COUNT : | 2

CAMERA COUNT : | 1

FEE ESTIMATE : | ¥288

CAMERA 1 :

| OK |          [MONITOR IMAGE]

FIG. 12

## FIG. 13

|  | START TIME | | END TIME |
| --- | --- | --- | --- |
| 1) | APR. 16, 20:00 | ∼ | APR. 16, 23:00 |
| 2) | APR. 27, 12:00 | ∼ | MAY. 05, 12:00 |

⋮

---

| SECURITY PERIOD 1 : | 3 HOURS |
| --- | --- |
| SECURITY PATTERN : | (1) CHECK ONLY |
| SENSOR COUNT : | 2 |
| CAMERA COUNT : | 1 |
| FEE ESTIMATE (NECESSARY DEPOSITS) : | ¥288(28) |
| AVAILABLE DEPOSITS : | 472 |

CAMERA 1 :

OK

[MONITOR IMAGE]

## INTERNATIONAL SEARCH REPORT

| | International application No. |
|---|---|
| | PCT/JP03/04719 |

**A. CLASSIFICATION OF SUBJECT MATTER**
Int.Cl⁷ G06F17/60

According to International Patent Classification (IPC) or to both national classification and IPC

**B. FIELDS SEARCHED**

Minimum documentation searched (classification system followed by classification symbols)
Int.Cl⁷ G06F17/60

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
JICST FILE(JOIS), WPI, INSPEC(DIALOG)

**C. DOCUMENTS CONSIDERED TO BE RELEVANT**

| Category* | Citation of document, with indication, where appropriate, of the relevant passages | Relevant to claim No. |
|---|---|---|
| Y | JP 2003-109203 A (Matsushita Electric Industrial Co., Ltd.), 12 April, 2002 (12.04.02), Full text; all drawings (Family: none) | 1-2,4-6, 8-11,13-15 |
| Y | JP 2002-109291 A (Komatsu Ltd.), 12 April, 2002 (12.04.02), Full text; all drawings (Family: none) | 1-2,4-6, 8-11,13-15 |
| Y | JP 2001-256380 A (Hitachi Building Systems Co., Ltd.), 21 September, 2001 (21.09.01), Pages 5, 6; Figs. 1, 19 (Family: none) | 3,7,12 |

☐ Further documents are listed in the continuation of Box C.  ☐ See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 14 May, 2003 (14.05.03) | Date of mailing of the international search report <br> 27 May, 2003 (27.05.03) |
|---|---|
| Name and mailing address of the ISA/ <br> Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP03/04719

C (Continuation). DOCUMENTS CONSIDERED TO BE RELEVANT

| Category* | Citation of document, with indication, where appropriate, of the relevant passages | Relevant to claim No. |
|---|---|---|
| E | JP 2003-52082 A   (Matsushita Electric Industrial Co., Ltd.), 21 February, 2003 (21.02.03), Full text; all drawings (Family: none) | 1-15 |
| E | JP 2003-84856 A   (Hitachi, Ltd.), 19 March, 2003 (19.03.03), Full text; all drawings (Family: none) | 1-15 |
| A | JP 11-96483 A   (Matsushita Electric Industrial Co., Ltd.), 09 April, 1999 (09.04.99), Full text; all drawings (Family: none) | 1-15 |

Form PCT/ISA/210 (continuation of second sheet) (July 1998)